(19) Europäisches Patentamt / European Patent Office / Office européen des brevets

(11) **EP 4 417 659 A1**

(12) **EUROPEAN PATENT APPLICATION**

(43) Date of publication:
**21.08.2024 Bulletin 2024/34**

(21) Application number: **24157843.4**

(22) Date of filing: **15.02.2024**

(51) International Patent Classification (IPC):
*C09D 11/322* (2014.01)    *C09D 11/54* (2014.01)
*D06P 1/44* (2006.01)      *D06P 5/08* (2006.01)
*D06P 5/30* (2006.01)      *D06P 1/52* (2006.01)

(52) Cooperative Patent Classification (CPC):
**C09D 11/54; C09D 11/322; D06P 1/44;
D06P 1/5285; D06P 5/08; D06P 5/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 JP 2023023071**

(71) Applicant: **KONICA MINOLTA, INC.
Tokyo 100-7015 (JP)**

(72) Inventor: **NITO, Ken
Tokyo, 100-7015 (JP)**

(74) Representative: **MFG Patentanwälte
Meyer-Wildhagen Meggle-Freund
Gerhard PartG mbB
Amalienstraße 62
80799 München (DE)**

(54) **INKJET COMPOSITION FOR TEXTILE PRINTING, TREATED FABRIC, IMAGE FORMED OBJECT, AND METHOD FOR FORMING IMAGE**

(57)    Provided is an inkjet composition for textile printing capable of improving texture while increasing fixability of a pigment.

The inkjet composition for textile printing includes a water-soluble cationic urethane compound containing a structural unit derived from polyethylene glycol.

**Description**

Background

Technological Field

The present invention relates to an inkjet composition for textile printing, a treated fabric, an image formed object, and a method for forming an image.

Description of the Related art

As a textile printing method, in recent years, inkjet textile printing in which an image is formed on a fabric by an inkjet method has been widely performed because dyeing can be performed in a short time and production efficiency is high.

As the ink used in inkjet textile printing, a dye ink has been mainly used, but use of a pigment ink with which a posttreatment such as a washing step of washing away a dye that has not been dissolved or reacted can be omitted has been studied.

While a pigment ink exhibits high color developability by the pigment particles being retained on the surface of a fabric, the fixability of the pigment particles is low and the rub fastness tends to be poor as compared with a dye ink. Therefore, studies have been made to increase the fixability of the pigment particles and increase the rub fastness by adding a resin emulsion (water-dispersible resin) to the ink or applying a posttreatment liquid (overcoat liquid) on the ink applied to a fabric.

As a posttreatment liquid used for inkjet textile printing, JP 2017-149812 A discloses an overcoat liquid including a water-dispersible resin, a predetermined water-soluble organic solvent, a crosslinkable component, and water. In Examples, an anionic urethane resin emulsion is used as the water-dispersible resin. According to this document, an anionic urethane resin and a crosslinkable component react with each other to form a strong film on an ink coating film, so that the rub fastness can be increased.

JP 2020-45445 A discloses an aqueous overcoat liquid including an aqueous resin (A), an organic solvent (B), and a triazine derivative (C). According to this document, an anionic urethane resin as the aqueous resin (A) has high film strength, so that the wet rub fastness can be increased.

As described above, all the posttreatment liquids conventionally used include a water-dispersible resin (resin particles). A water-dispersible resin forms a resin film on an ink coating film by being dried or heated, and thus the rub fastness can be easily increased. However, there is a problem that the fabric tends to become hard and the texture tends to be impaired by formation of the resin film.

Summary

The present invention has been made in view of the above problems, and an object thereof is to provide an inkjet composition for textile printing capable of improving texture while increasing fixability of a pigment, a treated fabric, an image formed object, and a method for forming an image.

To achieve the abovementioned object, according to an aspect of the present invention, an inkjet composition for textile printing reflecting one aspect of the present invention comprises: a water-soluble cationic urethane compound containing a structural unit derived from polyethylene glycol.

Detailed Description of Embodiments

Hereinafter, one or more embodiments of the present invention will be described with reference to the drawings. However, the scope of the invention is not limited to the disclosed embodiments.

As described above, conventional water-dispersible urethane resins form a resin film, and thus the fabric tends to become hard and the texture tends to be impaired.

On the other hand, a water-soluble cationic urethane compound, for example, fixes a pigment to a fabric, but does not form a film by being dried or heated, and thus the fabric is less likely to become hard. The water-soluble cationic urethane compound can also increase the slipperiness of the surface of the fabric or the image layer by the cationic site being adsorbed on the fiber surface and the physical and electrostatic interaction between fibers being weakened. Thus, not only the texture can be dramatically improved as compared with the image formed object treated with a conventional posttreatment liquid, but also the texture can be improved as compared with the image formed object that is not treated.

That is, the inkjet composition according to the present embodiment includes a water-soluble cationic urethane compound. Hereinafter, the inkjet composition for textile printing of the present invention will be described.

1. Inkjet composition for textile printing

The inkjet composition for textile printing (hereinafter, referred to as "inkjet composition") includes a water-soluble cationic urethane compound. The inkjet composition is suitable as a treatment liquid applied to a fabric by, for example, an inkjet method, but the use is not limited thereto, and can be used for other uses.

1-1. Water-soluble cationic urethane compound

The water-soluble cationic urethane compound contains a structural unit derived from polyethylene glycol and a tertiary amino group. The water-soluble cationic urethane compound does not form particles in an aqueous solvent at 25°C. Whether particles are formed can be determined by, for example, particle size distribution measurement. For example, when the distribution is unmeasurable (not detected), particles are determined to be not formed. Such a water-soluble cationic urethane compound (hereinafter, also referred to as "cationic urethane compound") can be obtained through, for example, a step of reacting a polyisocyanate (A), a polyol (B) containing polyethylene glycol, and a chain extender (C) containing a tertiary amino group, and then quaternizing at least a part of the tertiary amino group with an acid or the like.

That is, the cationic urethane compound contains a structural unit derived from the polyisocyanate (A), a structural unit derived from the polyol (B), and a structural unit derived from the chain extender (C) containing a tertiary amino group; and the structural unit derived from the polyol (B) contains a structural unit derived from polyethylene glycol.

(Polyisocyanate (A))

The polyisocyanate (A) can be any of an aliphatic polyisocyanate, an alicyclic polyisocyanate, and an aromatic polyisocyanate. The polyisocyanate (A) can be used singly or in combination of two or more types thereof.

Examples of the aliphatic polyisocyanate include tetramethylene diisocyanate, dodecamethylene diisocyanate, 1,4-butane diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

Examples of the alicyclic polyisocyanate include isophorone diisocyanate, hydrogenated xylylene diisocyanate, 4,4'-cyclohexylmethane diisocyanate, 1,4-cyclohexane diisocyanate, methylcyclohexylene diisocyanate, and 1,3-bis(isocyanatomethyl)cyclohexane.

Examples of the aromatic polyisocyanate include tolylene diisocyanate, 2,2'-diphenylmethane diisocyanate, 2,4'-diphenylmethane diisocyanate, 4,4'-diphenylmethane diisocyanate, 4,4'-diphenyldimethylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate, and $\alpha,\alpha,\alpha,\alpha$-tetramethylxylylene diisocyanate.

Among them, an alicyclic polyisocyanate and an aromatic polyisocyanate are preferable, and isophorone diisocyanate and tolylene diisocyanate are preferable.

(Polyol (B))

The polyol (B) contains polyethylene glycol.

The number average molecular weight of polyethylene glycol is not particularly limited, but is preferably 200 to 2000, and more preferably 200 to 1000. When the number average molecular weight of polyethylene glycol is 200 or more, the molecule has a more flexible structure, and thus the texture can be further increased. Meanwhile, when the number average molecular weight of polyethylene glycol is 2000 or less, the solubility in an aqueous solvent is further less likely to be impaired, and the viscosity of the inkjet composition can be further decreased. The number average molecular weight of polyethylene glycol can be measured in terms of polystyrene by gel permeation chromatography.

The polyol (B) can further contain other polyols other than polyethylene glycol as long as the water solubility is not impaired. Examples of other polyols include other polyalkylene glycols other than polyethylene glycol and polyester polyols.

Examples of other polyalkylene glycols include polypropylene glycol and polyethylene/polypropylene glycol.

Examples of polyester polyols include those obtained by condensation reaction between a polycarboxylic acid and a polyol, and preferably include those obtained by reaction between a dicarboxylic acid and an aliphatic diol. Examples of the dicarboxylic acid include malonic acid, citric acid, succinic acid, glutaric acid, adipic acid, pimelic acid, azelaic acid, sebacic acid, maleic acid, fumaric acid, terephthalic acid, and phthalic acid. Examples of the aliphatic diol include 1,4-butanediol, 1,6-hexanediol, and diethylene glycol.

The content percentage of the structural unit derived from polyethylene glycol in the structural unit derived from the polyol (B) is preferably 60% by mass or more, and more preferably 80% by mass or more based on the structural unit derived from the polyol (B). When the content percentage of polyethylene glycol is 60% by mass or more, the solubility of the resulting compound in an aqueous solvent is more easily increased, and the texture is also more easily increased. The upper limit of the content percentage is not particularly limited, but can be 100% by mass.

(Chain extender (C))

The chain extender (C) having a tertiary amino group is used for introducing a tertiary amino group for cationization into the cationic urethane compound. Examples of the chain extender (C) having a tertiary amino group include N-alkyldialkanolamines such as N-methyldiethanolamine and N-ethyldiethanolamine, N-alkyldiaminoalkylamines such as N-methyldiaminoethylamine and N-ethyldiaminoethylamine, and triethanolamine. These chain extenders (C) having a tertiary amino group can be used singly or in combination of two or more types thereof.

At least a part of the tertiary amino group is preferably neutralized with an acid or quaternized with a quaternizing agent. Thereby, the water solubility of the cationic urethane compound can be increased.

When the tertiary amino group is neutralized with an acid, organic acids such as formic acid, acetic acid, propionic acid, butyric acid, lactic acid, malic acid, malonic acid, and adipic acid, and inorganic acids such as hydrochloric acid, phosphoric acid, and nitric acid can be used as the acid.

When the tertiary amino group is quaternized with a quaternizing agent, for example, alkyl halides such as benzyl chloride and methyl chloride, and sulfuric acid esters such as dimethyl sulfate and diethyl sulfate can be used as the quaternizing agent.

The content of each structural unit can be adjusted so that the total number of moles of hydroxyl groups of the polyol (B) and the chain extender (C)/the number of moles of isocyanate groups of the polyisocyanate (A) will be about 1.

Among them, the content of the structural unit derived from the chain extender (C) is preferably 5 to 15% by mass based on the total of the structural unit derived from the polyisocyanate (A), the structural unit derived from the polyol (B), and the structural unit derived from the chain extender (C). When the content of the structural unit derived from the chain extender (C) is 5% by weight or more, the amount of tertiary amino groups to be introduced is increased, and the cationic property is also increased, so that not only the solubility in an aqueous solvent is increased, but also the effect of increasing the slipperiness of the fabric and the image layer is more easily obtained. On the other hand, when the amount of tertiary amino groups is too large, the water solubility can be impaired, and therefore the content of the structural unit derived from the chain extender (C) is preferably 15% by mass or less.

Physical properties

The weight average molecular weight of the cationic urethane compound is not particularly limited, but is preferably, for example, 600 to 10000. When the weight average molecular weight of the cationic urethane compound is 10000 or less, the solubility in an aqueous solvent is easily more increased, and the viscosity of the inkjet composition can be further decreased. When the weight average molecular weight of the cationic urethane compound is 600 or more, the effect of imparting flexibility is more easily obtained, and the texture is more easily increased. From the same viewpoints, the weight average molecular weight of the cationic urethane compound is more preferably 600 to 3000.

The weight average molecular weight of the cationic urethane compound can be measured in terms of polystyrene by gel permeation chromatography.

The content of the water-soluble cationic urethane compound in the inkjet composition is preferably 1 to 10% by mass based on the inkjet composition. When the content is 1% by mass or more, the texture is more easily increased. When the content is 10% by mass or less, the viscosity of the inkjet composition is more easily decreased, and the injection stability is more easily increased. Decrease in texture due to stickiness is also less likely to occur. From the same viewpoints, the content is more preferably 2 to 6% by mass.

1-2. Aqueous solvent

The inkjet composition preferably further includes an aqueous solvent. The aqueous solvent contains water, and preferably further contains a water-soluble organic solvent.

The water-soluble organic solvent is not particularly limited as long as it is compatible with water, and examples thereof include polyhydric alcohols (for example, dihydric alcohols such as ethylene glycol, diethylene glycol, triethylene glycol, polyethylene glycol, propylene glycol, dipropylene glycol, tripropylene glycol, and polypropylene glycol; and trihydric or higher hydric alcohols such as glycerin, trimethylolpropane, and hexanetriol); polyhydric alcohol ethers (for example, ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, diethylene glycol dimethyl ether, propylene glycol monomethyl ether, and propylene glycol monoethyl ether); monohydric alcohols (for example, methanol, ethanol, propanol, pentanol, hexanol, cyclohexanol, and benzyl alcohol); amines (for example, ethanolamine, N-ethyldiethanolamine, morpholine, N-ethylmorpholine, ethylenediamine, diethylenediamine, and triethylenetetramine); amides (for example, formamide, N,N-dimethylformamide, and N,N-dimethylacetamide); heterocycles (for example, 2-pyrrolidone, N-methyl-2-pyrrolidone, N-cyclohexyl-2-pyrrolidone, 2-oxazolidone, and 1,3-dimethyl-2-imidazolidine), sulfoxides (for example, dimethylsulfoxide); and sulfones (for example, sulfolane).

The cationic urethane compound contains a structural unit derived from polyethylene glycol, and thus the solubility in an aqueous solvent is likely to change depending on the temperature. Specifically, the cationic urethane compound exhibits, for example, high solubility in the aqueous solvent at a temperature less than 30°C, but has low solubility in an aqueous solvent and is likely to cause phase separation at a high temperature of 30°C or more.

That is, at a low temperature, the molecular chain of the cationic urethane compound forms a helical structure and takes an aqueous solvent therein, so that the cationic urethane compound is easily dissolved in the aqueous solvent. On the other hand, at a high temperature, the molecular chain of the cationic urethane compound is easily spread linearly, and hydrophobicity is easily exhibited, so that the cationic urethane compound is hardly dissolved in the aqueous solvent.

In the present embodiment, the aqueous solvent preferably contains a solvent that exhibits moderate hydrophobicity as a water-soluble organic solvent, that is, a solvent having a LogP value of - 0.5 to 0.75. Thereby, a decrease in injection stability due to a decrease in the solubility of the cationic urethane compound at the time of injection from the inkjet head at a high temperature can be suppressed. The solvent having a LogP value that satisfies the above range can impart moderate hydrophobicity to the inkjet composition. Therefore, the solubility of the cationic urethane compound is less likely to decrease even at a high temperature, and the decrease in injection stability can be further suppressed.

The "LogP value" is herein a coefficient indicating the affinity of an organic compound for water and 1-octanol. 1-Octanol-water partition coefficient P is the partition equilibrium when a trace amount of a compound is dissolved as a solute in a two-liquid phase solvent of 1-octanol and water, is the ratio of the equilibrium concentration of the compound in each solvent, and is shown in their LogP for the base 10. That is, the "LogP value" is a logarithmic value of the 1-octanol-water partition coefficient, and is known as an important parameter indicating the hydrophilicity and hydrophobicity of a molecule.

The LogP value can be calculated by calculation by the fragment method, the atomic approach method or the like. Examples of the typical software for calculating LogP includes Chem 3D Ultra 7.0 from Cambridge. As a hardware used for the calculation, a personal computer can execute the calculation sufficiently fast. In the present embodiment, as the LogP value, a CLogP value calculated from the molecular structure of the solvent using Chem Draw Ultra 7.0 from CambridgeSoft is used.

Examples of the solvent having a LogP value of - 0.5 to 0.75 include alkylene glycols and alkylene glycol ethers having a LogP value of - 0.5 to 0.75. Specific examples thereof include dipropylene glycol (- 0.46), tripropylene glycol (- 0.38), dipropylene glycol monomethyl ether (0.00), tripropylene glycol monomethyl ether (0.08), 3-methyl-1,3-butanediol (0.16), 1,5-pentanediol (0.27), isopropyl alcohol (0.28), diethylene glycol ethyl ether acetate (0.32), ethylene glycol diacetate (0.40), 1,4-butanediol (0.50), triethylene glycol butyl ether (0.51), diethylene glycol butyl ether (0.56), 1,2-hexanediol (0.58), 2-butanol (0.60), propylene glycol propyl ether (0.62), and propylene glycol diacetate (0.74).

The LogP value of the solvent is more preferably 0.25 to 0.75, and dipropylene glycol (- 0.46), tripropylene glycol monomethyl ether (0.08), triethylene glycol butyl ether (0.51), 1,2-hexanediol (0.58), and propylene glycol diacetate (0.74) are further preferable. This is because many of these solvents not only exhibit moderate hydrophobicity, but also have a polyethylene oxide structure similar to that of the cationic urethane compound, and the solubility of the cationic urethane compound is easily increased.

The content of the solvent having a LogP value of 0.25 to 0.75 in the inkjet composition is preferably 2 to 15% by mass, and more preferably 3 to 10% by mass. When the content of the solvent is 2% by mass or more, the aqueous solvent becomes moderately hydrophobic, and thus the decrease in the solubility of the cationic urethane compound at a high temperature is more easily suppressed, and the injection stability is more easily increased. When the content of the solvent is 15% by mass or less, the solubility of the cationic urethane compound is more easily maintained at room temperature, and the storage stability is more easily increased.

The water-soluble organic solvent can contain both a solvent having a LogP value of - 0.5 to 0.75 (solvent A having a relatively high LogP value) and a solvent having a LogP value of less than - 0.5 (solvent B having a relatively low LogP value). In that case, the content of the solvent A can be smaller than the content of the solvent B.

From the viewpoint of further increasing the stability of the injection by an inkjet method, at least one of the solvent A and the solvent B can contain a solvent having a boiling point of 180°C or more, preferably 190°C or more, and more preferably 200°C or more. Examples of the solvent having a boiling point of 200°C or more include dihydric alcohols such as 1,3-butanediol (boiling point: 208°C), 1,6-hexanediol (boiling point: 223°C), and polypropylene glycol; and trihydric or higher alcohols such as glycerin (boiling point: 290°C) and trimethylolpropane (boiling point: 295°C).

The content of water in the inkjet composition is 30 to 85% by mass, preferably 50 to 75% by mass based on the inkjet composition. The total amount of the water-soluble organic solvent in the inkjet composition is 10 to 70% by mass, preferably 20 to 60% by mass based on the inkjet composition.

### 1-3. Other components

The inkjet composition can further include other components other than the components above as necessary. Examples of other components include a surfactant and a preservative.

The surfactant can decrease the surface tension of the inkjet composition to increase the wettability to a fabric. The type of the surfactant is not particularly limited, but can be, for example, an acetylene glycol surfactant, a silicone surfactant, or a fluorine surfactant.

Examples of the preservative or the antifungal agent include an aromatic halogen compound (for example, Preventol CMK), methylene dithiocyanate, a halogen-containing nitrogen-sulfur compound, and 1,2-benzisothiazolin-3-one (for example, PROXEL GXL).

However, the inkjet composition preferably includes substantially no coloring material such as a pigment. The phrase "include substantially no" means that the content is 0.1% by mass or less, preferably 0% by mass based on the inkjet composition. For example, a pigment may be dispersed by an anionic pigment dispersant as described later. This is because when such a pigment dispersant is contained in the inkjet composition, the cationic urethane compound and the anionic pigment dispersant are aggregated by an electrical action, and injection by an inkjet method becomes difficult.

### 1-4. Physical properties

The pH of the inkjet composition can be any value as long as the solubility of the cationic urethane compound in an aqueous solvent is not impaired, and is preferably, for example, 3.5 to 6.0. When the pH is 3.5 or more, the damage to the head can be decreased. When the pH is 6.0 or less, phase separation due to the decrease in the solubility of the cationic urethane compound is more easily suppressed, and the injection stability is further hardly impaired.

The pH of the inkjet composition can be adjusted by, for example, the amount of neutralization of the amino group of the cationic urethane compound with an acid. When the amount of neutralization of the amino group of the cationic urethane compound with an acid is increased, the pH tends to be decreased.

### 1-5. Use

The cationic urethane compound can be used for various purposes such as an aggregating agent for aggregating the pigment contained in an ink and a binder for fixing or protecting the pigment applied to a fabric. Therefore, the inkjet composition including the cationic urethane compound can be preferably used as treatment liquids such as a pretreatment liquid and a posttreatment liquid (overcoat liquid). The composition is suitable for inkjet uses, but can also be used for uses other than inkjet uses.

### 2. Method for forming image

The method for forming an image according to an embodiment of the present invention includes the steps of: 1) applying an inkjet ink (hereinafter, also referred to as "ink") on a fabric by an inkjet method; and 2) applying a treatment liquid on the ink applied on the fabric. In the present embodiment, an example of using the inkjet composition as a posttreatment liquid will be described.

### 2-1. Step of applying ink

An ink is applied on a fabric by an inkjet method. The composition of the ink will be described later.

Fibers that constitute the fabric are not particularly limited, and examples thereof include natural fibers such as cotton (cellulose fiber), hemp, wool, and silk; chemical fibers such as rayon, vinylon, nylon, acryl, polyurethane, polyester, and acetate, and blended fibers thereof. Among them, the resin that constitutes the fabric can be hydrophilic fibers such as cotton, hydrophobic fibers such as polyester, or blended fibers thereof. The fabric can have any form such as a woven fabric, a nonwoven fabric, or a knitted fabric obtained from these fibers. The fabric can be also a blended woven fabric or a blended nonwoven fabric of two or more types of fibers.

An aggregating agent for aggregating the pigment and the like in the ink can be attached to the fabric. That is, a treated fabric including a fabric and an aggregating agent attached thereto can be used. Thus, the pigment and the water-dispersible resin in the ink can be easily aggregated on the fabric.

Then, the ink applied on the fabric can be further dried.

The ink is dried by removing a solvent and the like contained in each liquid applied to the fabric. The drying method is not particularly limited, and drying can be performed at room temperature or by heating. The heating method can be a method using a heater, a warm air dryer, a heating roller or the like, and is preferably a method of heating from both surfaces of the fabric using a warm air dryer and a heater.

The drying temperature is not particularly limited, but can be, for example, 80 to 180°C because an ink or a first treatment liquid containing a relatively large amount of polyhydric alcohols is used. The drying time can be, for example, 1 to 10 minutes depending on the drying temperature.

2-2. Step of posttreatment

Then, the inkjet composition is applied as a posttreatment liquid on the ink applied to the fabric. Thereby, the cationic urethane compound attaches so as to cover the pigment on the fabric, so that the slipperiness of the surface can be increased while the fixability of the pigment is increased.

The method for applying the inkjet composition is not particularly limited, can be any of an immersion method, a spray method, and an inkjet method, and is preferably an inkjet method.

The inkjet composition to be applied is preferably heated. This is to decrease the viscosity of the inkjet composition, to more stably perform injection by an inkjet method, and to suppress the fluctuation in the ejection temperature due to the temperature fluctuation of the inkjet head. Specifically, the heating temperature of the inkjet composition can be 20 to 35°C, preferably 30 to 35°C.

As described above, the solubility of the cationic urethane compound in an aqueous solvent tends to decrease at a high temperature. On the other hand, by incorporating the solvent having a LogP value in a predetermined range into the inkjet composition, the decrease in injection stability at a high temperature can be further decreased.

The application amount of the inkjet composition can be set so that the attachment amount of the cationic urethane compound will be preferably 0.3 to 3.0 g/m$^2$, and more preferably 0.3 to 1.0 g/m$^2$. When the attachment amount of the cationic urethane compound is within the above range, the texture of the fabric can be further increased.

Then, the inkjet composition applied on the fabric can be further dried. The drying method and conditions of the inkjet composition can be the same as the drying method and conditions of the ink.

2-3. Other steps

The method for forming an image according to the present embodiment can further include other steps as necessary. For example, before the step 2), a step of pretreating the fabric can be further performed.

In the pretreatment step, for example, the fabric is brought into contact with a pretreatment liquid containing an aggregating agent and then dried, thereby a fabric to which the aggregating agent is attached can be obtained.

(Pretreatment liquid)

The pretreatment liquid contains an aggregating agent and an aqueous solvent.

The type of the aggregating agent can be any type as long as it aggregates the pigment or the like contained in the ink, and can be an aggregating agent in which a change in pH is used or an aggregating agent in which an electrical action is used.

Examples of the aggregating agent that aggregates using a change in pH include organic acids. Examples of the organic acids include, as carboxylic acids having 6 or less carbon atoms, saturated fatty acids such as formic acid, acetic acid, propionic acid, butyric acid, valeric acid, and hexanoic acid, and hydroxy acids such as lactic acid, malic acid, and citric acid.

Examples of the aggregating agent that aggregates using an electrical action include a polyvalent metal salt and a compound having a cationic group or an anionic group. For example, when the pigment dispersant contained in the ink is anionic, the aggregating agent preferably contains a polyvalent metal salt or a compound having a cationic group.

The polyvalent metal salt can be a compound soluble in water, having a divalent or higher polyvalent metal ion and an anion that binds thereto. Examples of the polyvalent metal ion include divalent metal ions such as $Ca^{2+}$, $Cu^{2+}$, $Ni^{2+}$, $Mg^{2+}$, $Zn^{2+}$, and $Ba^{2+}$; and trivalent metal ions such as $Al^{3+}$, $Fe^{3+}$, and $Cr^{3+}$. Examples of the anion include $Cl^-$, $I^-$, $Br^-$, $SO_4^{2-}$, $ClO_3^-$, $NO_3^-$, $HCOO^-$, and $CH_3COO^-$. Among them, a calcium salt and a magnesium salt are preferable, and calcium nitrate and calcium chloride are preferable.

Examples of the cationic group in the compound having a cationic group include a secondary amino group, a tertiary amino group, and a quaternary ammonium base. Examples of the compound having a cationic group include the cationic urethane compound. In addition, cationic resins such as a cationic urethane resin, a cationic olefin resin, and a cationic allylamine resin can be used.

As the aqueous solvent, the same solvent as the solvent of the inkjet composition can be used.

The pretreatment liquid can further contain a pH adjustor, a preservative and the like as necessary. As the pH adjustor and the preservative, those same as those described above can be used.

The method for bringing the fabric into contact with the pretreatment liquid can be same as the method described above.

The attachment amount of the aggregating agent is not particularly limited, but can be, for example, 0.1 to 5.0 g/m$^2$.

3. Image formed object

3-1. Configuration

The image formed object according to the present embodiment includes a fabric, an image layer, and the cationic urethane compound attached to the fabric or the image layer.

The image layer is placed on the fabric. In the present embodiment, the image layer contains components derived from an ink, that is, a pigment and a water-dispersible resin.

The cationic urethane compound is attached to the fabric or the image layer. In the present embodiment, the cationic urethane compound is attached to the image layer. Specifically, the cationic urethane compound can be attached on the image layer or can be contained in the image layer, and is preferably attached on the image layer from the viewpoint of easily increasing the slipperiness and further increasing the texture. Whether the cationic urethane compound is attached can be confirmed by $^1$H-NMR.

3-2. Action

In the image formed object according to the present embodiment, the cationic urethane compound does not form a film on the image layer, but is intermittently attached to the surface. Therefore, the fabric is less likely to become hard. In addition, the cationic site of the cationic urethane compound is adsorbed on the fiber surface, the physical and electrostatic interaction between fibers is weakened, and thus the slipperiness of the surface of the image layer can be increased. From these, the texture of the image formed object can be highly improved.

4. Inkjet ink

The ink used in the method for forming an image contains a pigment, a water-dispersible resin, and an aqueous medium.

4-1. Pigment

The pigment is not particularly limited, but can be, for example, an organic pigment or an inorganic pigment having the following numbers listed in Colour Index International.

Examples of orange pigments include C.I. Pigment Orange 31 and 43.

Examples of red or magenta pigments include Pigment Red 3, 5, 19, 22, 31, 38, 43, 48 : 1, 48 : 2, 48 : 3, 48 : 4, 48 : 5, 49 : 1, 53 : 1, 57 : 1, 57 : 2, 58 : 4, 63 : 1, 81, 81 : 1, 81 : 2, 81 : 3, 81 : 4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of blue or cyan pigments include Pigment Blue 1, 15, 15: 1, 15: 2, 15: 3, 15: 4, 15: 6, 16, 17-1, 22, 27, 28, 29, 36, and 60.

Examples of green or yellow pigments include Pigment Green 7, 26, 36, and 50. Examples of yellow pigments include Pigment Yellow 1, 3, 12, 13, 14, 15, 17, 34, 35, 37, 55, 74, 81, 83, 93, 94, 95, 97, 108, 109, 110, 128, 137, 138, 139, 151, 153, 154, 155, 157, 166, 167, 168, 180, 185, 193, and 213.

Examples of black pigments include Pigment Black 7, 28, and 26.

Examples of white pigments include titanium dioxide.

The pigment is preferably further dispersed with a pigment dispersant from the viewpoint of increasing dispersibility in the ink. The pigment dispersant will be described later.

The pigment can be a self-dispersible pigment. The self-dispersible pigment is a particle in which the surface of a pigment particle is modified with a group having a hydrophilic group, and has a pigment particle and a group having hydrophilicity bonded to the surface.

Examples of the hydrophilic group include a carboxyl group, a sulfonic acid group, and a phosphorus-containing group. Examples of the phosphorus-containing group include a phosphoric acid group, a phosphonate group, a phosphinate group, a phosphite group, and a phosphate group.

Examples of commercially available products of the self-dispersible pigment include Cab-0-Jet (registered trademark) 200 K, 250 C, 260 M, and 270 V (sulfonic acid group-containing self-dispersible pigment), Cab-0-Jet (registered trademark) 300 K (carboxylic acid group-containing self-dispersible pigment), and Cab-0-Jet (registered trademark) 400 K, 450 C, 465 M, 470 V, and 480 V (phosphoric acid group-containing self-dispersible pigment) manufactured by Cabot Corporation.

The content of the pigment is not particularly limited, but is preferably 0.3 to 10% by mass, and more preferably 0.5 to 5% by mass based on the ink from the viewpoint of easily adjusting the viscosity of the ink within the above range and enabling formation of a high-concentration image. When the content of the pigment is equal to or more than the lower limit, the color of the image tends to be more vivid. When the content of the pigment is equal to or less than the upper limit, the viscosity of the ink does not become too high, and ejection stability is hardly impaired.

4-2. Water-dispersible resin

The water-dispersible resin can be contained for the purpose of fixing a pigment or the like to a fabric. The water-dispersible resin can be contained as a resin particle in an ink.

The Tg of the water-dispersible resin is not particularly limited, but the glass transition temperature of the water-dispersible resin is preferably low, and can be, for example, - 30 to 100°C, preferably - 25 to 50°C, and more preferably - 25 to 0°C from the viewpoint of making the fabric less likely to become hard and easily maintain the texture even after image formation. The glass transition temperature of the water-dispersible resin can be measured by differential scanning calorimetry at a rate of temperature increase of 10°C/min according to JIS K 7121.

The type of the water-dispersible resin is not particularly limited as long as Tg satisfies the above range. Examples of the water-dispersible resin include a (meth)acrylic resin, a polyurethane resin, and a polyester resin. Among them, a (meth)acrylic resin and a polyurethane resin are preferable from the viewpoint of having good flexibility and further easily maintaining the texture of the fabric. In the present specification, (meth)acrylic refers to acrylic, methacrylic, or both of them.

The water-dispersible resin can have an ionic group. The ionic group of the water-dispersible resin can be an ionic group that forms a pair with the ionic group of the fabric or the aggregating agent attached to the fabric. For example, an aggregating agent usually has a cationic group, the water-dispersible resin contained in the ink can have an anionic group. Examples of the anionic group include a carboxyl group, a sulfonic acid group, and a phosphonic acid group.

The acid value of the water-dispersible resin is not particularly limited, but is preferably 15 to 100 mgKOH/g and more preferably 20 to 80 mgKOH/g from the viewpoint of further increasing the rub fastness. The acid value of the water-dispersible resin can be measured according to JIS K 0070. The acid value of the water-dispersible resin can be adjusted by, for example, the amount of carboxyl groups as an anionic group.

The average particle diameter of the water-dispersible resin in the ink is not particularly limited, but is preferably 30 to 200 nm, and more preferably 50 to 120 nm, for example, from the viewpoint of performance of ejection by an inkjet method. The average particle diameter is an average of primary particle diameters. The average particle diameter can be measured, for example, as a dispersed particle diameter (Z-average) in a Zataizer Nano S 90 manufactured by Melvern Instruments Ltd.

The weight average molecular weight of the water-dispersible resin is not particularly limited, but is more than the weight average molecular weight of the cationic urethane compound, and can be, for example, 10000 to 1000000. The weight average molecular weight of the water-dispersible resin can be measured by the same method as described above.

The content of the water-dispersible resin is not particularly limited, but is preferably 1 to 25% by mass based on the ink. When the content of the water-dispersible resin is 1% by mass or more, the fixability of the ink to the fabric is more easily increased. When the content of the water-dispersible resin is 25% by mass or less, the texture is further hardly impaired. From the same viewpoints, the content of the water-dispersible resin is more preferably 5 to 20% by mass based on the ink.

4-3. Aqueous solvent

The aqueous solvent contains water, and preferably further contains a water-soluble organic solvent. Examples of the water-soluble organic solvent include the same ones as those described above.

The content of water is, for example, 20 to 70% by mass, and preferably 30 to 60% by mass based on the ink. The content of the water-soluble organic solvent is, for example, 20 to 70% by mass, and preferably 30 to 60% by mass based on the ink.

4-4. Other components

The ink can further contain other components as necessary. Examples of other components include a pigment dispersant, a surfactant, a preservative, an antifungal agent, and a pH adjustor. The same surfactant, preservative or antifungal agent, and pH adjustor as described above can be used.

The pigment dispersant is present in the ink so as to surround the surface of pigment particles, or is adsorbed on the surface of pigment particles to form a pigment dispersion liquid, thereby dispersing the pigment well. The pigment dispersant is preferably a polymer dispersant, and more preferably an anionic polymer dispersant.

The anionic polymer dispersant is a polymer dispersant having a hydrophilic group such as a carboxylic acid group, a phosphorus-containing group, or a sulfonic acid group, and is preferably a polymer dispersant having a carboxylic acid group.

The polymer dispersant having a carboxylic acid group can be a polycarboxylic acid or a salt thereof. Examples of the polycarboxylic acid include a (co)polymer of a monomer selected from acrylic acid or a derivative thereof, maleic acid or a derivative thereof, itaconic acid or a derivative thereof, and fumaric acid or a derivative thereof, and a salt thereof. Examples of other monomers that constitute the copolymer include styrene and vinylnaphthalene.

The anionic group equivalent of the anionic polymer dispersant is preferably, for example, 1.1 to 3.8 meq/g from the viewpoint of sufficiently dispersing the pigment particles. When the anionic group equivalent is within the above range, high pigment dispersibility is easily obtained without increasing the molecular weight of the anionic polymer dispersant. The anionic group equivalent of the anionic polymer dispersant can be determined from the acid value. The acid value can be measured according to JIS K 0070.

The weight average molecular weight (Mw) of the polymer dispersant is not particularly limited, but is preferably 5000 to 30000. When the Mw of the polymer dispersant is 5000 or more, the pigment particles are easily sufficiently dispersed, and when the Mw of the polymer dispersant is 30000 or less, the ink is not excessively thickened, so that the permeability into the fabric is hardly impaired. The Mw of the polymer dispersant can be measured by the same method as described above.

The content of the polymer dispersant is not particularly limited as long as the pigment particles are sufficiently dispersed and the viscosity is in a range that does not impair the permeability to the fabric, but is preferably 20 to 100% by mass and more preferably 25 to 60% by mass relative to the pigment.

4-5. Physical properties

The viscosity of the ink at 25°C is not particularly limited as long as the performance of injection by an inkjet method is good, but is preferably 3 to 20 mPa · s, and more preferably 4 to 12 mPa · s. The viscosity of the ink can be measured by an E-type viscometer at 25°C.

In the above embodiment, an example in which the inkjet composition is used as a posttreatment liquid has been shown, but the present invention is not limited thereto, and the inkjet composition can be used as a pretreatment liquid.

For example, in the method for forming an image, before the step of applying the ink, 3) a step of applying an inkjet composition to the fabric (pretreatment step) can be further performed; and as the fabric used in the step of applying the ink, a treated fabric to which the cationic urethane compound is attached can be used.

Examples

Hereinafter, the present invention will be specifically described with reference to Examples, but the present invention is not limited thereto.

1. Material of treatment liquid

1-1. Cationic urethane compound

<Preparation of compound 1>

38% by mass of PEG 600 (manufactured by KANTO KAGAKU, number average molecular weight: 600), 1% by mass of trimethylolpropane, 5% by mass of N-methyl-N,N-diethanolamine, 23% by mass of tolylene diisocyanate, and 33% by mass of methyl ethyl ketone were mixed in a reaction vessel, and the reaction was performed at a reaction temperature of 70 to 75°C to obtain a cationic urethane compound.

3% by mass of acetic acid was added to and mixed with the obtained cationic urethane compound, then water was added thereto, the mixture was uniformly mixed, and then MEK was recovered to obtain an aqueous water-soluble cationic urethane compound solution containing 25% by mass of an active ingredient.

<Preparation of compound 2>

An aqueous water-soluble cationic urethane compound solution was obtained in the same manner as in the compound 1 except that the amount of PEG 600 was changed to 46% by mass and the amount of tolylene diisocyanate was changed to 15% by mass.

<Preparation of compound 3>

30% by mass of PEG 1000 (manufactured by KANTO KAGAKU, number average molecular weight: 1000), 1% by mass of trimethylolpropane, 4% by mass ofN-methyl-N,N-diethanolamine, 15% by mass of tolylene diisocyanate, and 50% by mass of methyl ethyl ketone were mixed in a reaction vessel, and the reaction was performed at a reaction temperature of 70 to 75°C to obtain a cationic urethane compound.
3% by mass of acetic acid was added to and mixed with the obtained cationic urethane compound, then water was added thereto, the mixture was uniformly mixed, and then MEK was recovered to obtain an aqueous water-soluble cationic urethane compound solution containing 25% by mass of an active ingredient.

<Preparation of compound 4>

An aqueous water-soluble cationic urethane compound solution was obtained in the same manner as in the compound 1 except that tolylene diisocyanate was changed to isophorone diisocyanate.

<Preparation of compound 5>

38% by mass of a polycarbonate polyol (NIPPOLLAN 981, manufactured by Nippon Polyurethane Industry Co.,Ltd., number average molecular weight: 1000), 1% by mass of trimethylolpropane, 5% by mass of N-methyl-N,N-diethanolamine, 33% by mass of isophorone diisocyanate, and 33% by mass of methyl ethyl ketone were mixed in a reaction vessel, and the reaction was performed at a reaction temperature of 70 to 75°C to obtain a cationic urethane compound.
3% by mass of acetic acid was added to and mixed with the obtained cationic urethane compound, then water was added thereto, the mixture was uniformly mixed, and then MEK was recovered to obtain an aqueous water-dispersible cationic urethane compound 5 solution containing 25% by mass of an active ingredient.

<Preparation of compound 6>

An aqueous water-dispersible cationic urethane compound solution containing 25% by mass of an active ingredient was obtained in the same manner as in the compound 5 except that 38% by mass of a polycarbonate polyol (NIPPOLLAN 981, manufactured by Nippon Polyurethane Industry Co.,Ltd., number average molecular weight: 1000) was changed to 36% by mass of a polycarbonate polyol (NIPPOLLAN 981, Nippon Polyurethane Industry Co.,Ltd.) and 2% by mass of PEG 600.

<Compounds 7 and 8>

Compound 7: Hydran CP-7010 (manufactured by Dainihon Inki Kagakukougyou Kabushikigaisya, water-dispersible resin, solid content: 30% by mass)
Compound 8: Superflex 650 (manufactured by DKS Co. Ltd., water-dispersible resin, solid content: 25% by mass)

The obtained compounds 1 to 8 are summarized in the following Table 1.

[Table 1]

|  | Mw | State | Remark |
|---|---|---|---|
| Compound 1 | 1200 | Water-soluble | Present invention |
| Compound 2 | 1800 | Water-soluble | Present invention |
| Compound 3 | 1400 | Water-soluble | Present invention |

(continued)

|  | Mw | State | Remark |
|---|---|---|---|
| Compound 4 | 1000 | Water-soluble | Present invention |
| Compound 5 | Unmeasurable | Water-dispersible (resin particle) | Comparative |
| Compound 6 | Unmeasurable | Water-dispersible (resin particle) | Comparative |
| Compound 7 | Unmeasurable | Water-dispersible (resin particle) | Comparative |
| Compound 8 | Unmeasurable | Water-dispersible (resin particle) | Comparative |

Each weight average molecular weight Mw of the compounds 1 to 8 was measured in terms of polystyrene by gel permeation chromatography.

1-2. Water-soluble organic solvent

The solvents in the following Table 2 were prepared.

[Table 2]

| Solvent | LogP value |
|---|---|
| Ethylene glycol | -1.36 |
| Triethylene glycol dimethyl ether | -0.67 |
| Dipropylene glycol | -0.46 |
| Tripropylene glycol monomethyl ether | 0.08 |
| 1,5-Pentanediol | 0.27 |
| Triethylene glycol butyl ether | 0.51 |
| 1,2-Hexanediol | 0.58 |
| Propylene glycol diacetate | 0.74 |
| Ethylene glycol monobutyl ether | 0.78 |
| Dipropylene glycol butyl ether | 1.50 |

(Calculation of LogP value)

The LogP of each solvent was calculated by the fragment method. Specifically, the CLogP value calculated from the molecular structure of the solvent using Chem Draw Ultra 7.0 from CambridgeSoft was adopted.

1-3. Other components

OLFINE E 1010 (manufactured by Nissin Chemical co.,ltd., surfactant)
Proxel GXL (manufactured by Lonza Japan Ltd., 1,2-benzisothiazolin-3-one antifungal agent)

2. Preparation of treatment liquid

<Preparation of treatment liquids 1 to 25>

As shown in Tables 3 to 5, components were mixed to prepare each treatment liquid.

The obtained treatment liquids 1 to 10 are shown in Table 3, the obtained treatment liquids 11 to 19 are shown in Table 4, and the obtained treatment liquids 20 to 25 are shown in Table 5. The pHs of treatment liquids at 25°C were measured with a pH meter and found to be all within the range of 3.5 to 4.5.

[Table 3]

| Treatment liquid | | | | 1 | 2 | 3 | 4 | 5 | 6 | 7 | 8 | 9 | 10 |
|---|---|---|---|---|---|---|---|---|---|---|---|---|---|
| Composition | Cationic urethane compound | Type | Classification | | | | | | | | | | |
| | | Compound 1 | Water-soluble | 1 | 5 | 10 | 12 | | | | 5 | 5 | 5 |
| | | Compound 2 | Water-soluble | | | | | 5 | | | | | |
| | | Compound 3 | Water-soluble | | | | | | 5 | | | | |
| | | Compound 4 | Water-soluble | | | | | | | 5 | | | |
| | | Compound 5 | Water-dispersible | | | | | | | | | | |
| | | Compound 6 | Water-dispersible | | | | | | | | | | |
| | | Compound 7 | Water-dispersible | | | | | | | | | | |
| | | Compound 8 | Water-dispersible | | | | | | | | | | |
| | Solvent | Type | LogP | | | | | | | | | | |
| | | Glycerin | -1.76 | to | 10 | 10 | 10 | 10 | 10 | 10 | 5 | 5 | 5 |
| | | Ethylene glycol | -1.36 | 20 | 20 | 20 | 20 | 20 | 20 | 20 | 15 | 15 | 15 |
| | | Triethylene glycol dimethyl ether | -0.67 | | | | | | | | 10 | | |
| | | Dipropylene glycol | -0.46 | | | | | | | | | 10 | |
| | | Tripropylene glycol monomethyl ether | 0.08 | | | | | | | | | | 10 |
| | | 1,5-Pentanediol | 0.27 | | | | | | | | | | |

| Treatment liquid | | | 1 | 2 | 3 | 4 | 5 | 6 | 7 | 8 | 9 | 10 |
|---|---|---|---|---|---|---|---|---|---|---|---|---|
| | Triethylene glycol butyl ether | 0.51 | | | | | | | | | | |
| | 1,2-Hexanediol | 0.58 | | | | | | | | | | |
| | Propylene glycol diace-tate | 0.74 | | | | | | | | | | |
| | Ethylene gly-col monobutyl ether | 0.78 | | | | | | | | | | |
| | Dipropylene glycol butyl ether | 1.50 | | | | | | | | | | |
| Surfactant | E1010 | | 0.1 | 0.1 | 0.1 | 0.1 | 0.1 | 0.1 | 0.1 | 0.1 | 0.1 | 0.1 |
| Preservative | Proxcel GXL (S) | | 0.05 | 0.05 | 0.05 | 0.05 | 0.05 | 0.05 | 0.05 | 0.05 | 0.05 | 0.05 |
| Ion exchanged water | | | 68.85 | 64.85 | 59.85 | 57.85 | 64.85 | 64.85 | 64.85 | 64.85 | 64.85 | 69.85 |
| Total | | | 100 | 100 | 100 | 100 | 100 | 100 | 100 | 100 | 100 | 100 |
| Remark | | | Present in-vention | Present in-vention | Present in-vention | Present in-vention | Present in-vention | Present in-vention | Present in-vention | Present in-vention | Present in-vention | Present in-vention |

EP 4 417 659 A1

14

[Table 4]

| Treatment liquid | | | | 11 | 12 | 13 | 14 | 15 | 16 | 17 | 18 | 19 |
|---|---|---|---|---|---|---|---|---|---|---|---|---|
| Composition | Cationic urethane compound | Type | Classification | | | | | | | | | |
| | | Compound 1 | Water-soluble | 5 | 5 | 5 | 5 | 5 | 5 | 5 | 5 | 5 |
| | | Compound 2 | Water-soluble | | | | | | | | | |
| | | Compound 3 | Water-soluble | | | | | | | | | |
| | | Compound 4 | Water-soluble | | | | | | | | | |
| | | Compound 5 | Water-dispersible | | | | | | | | | |
| | | Compound 6 | Water-dispersible | | | | | | | | | |
| | | Compound 7 | Water-dispersible | | | | | | | | | |
| | | Compound 8 | Water-dispersible | | | | | | | | | |
| | Solvent | Type | LogP | | | | | | | | | |
| | | Glycerin | -1.76 | 5 | 5 | 5 | 5 | 5 | 5 | 10 | 10 | 10 |
| | | Ethylene glycol | -1.36 | 15 | 15 | 15 | 15 | 15 | 15 | 20 | 20 | 20 |
| | | Triethylene glycol dimethyl ether | -0.67 | | | | | | | | | |
| | | Dipropyiene glycol | -0.46 | | | | | | | | | |
| | | Tripropylene glycol monomethyl ether | 0.08 | | | | | | | | | |
| | | 1,5-Pentanediol | 0.27 | 10 | | | | | | | | |

| Treatment liquid | | | | 11 | 12 | 13 | 14 | 15 | 16 | 17 | 18 | 19 |
|---|---|---|---|---|---|---|---|---|---|---|---|---|
| | | Triethylene glycol butyl ether | 0.51 | | 10 | | | | | 5 | 3 | 5 |
| | | 1,2-Hexanediol | 0.58 | | | 10 | | | | | | 5 |
| | | Propylene glycol diacetate | 0.74 | | | | 10 | | | | | |
| | | Ethylene glycol monobutyl ether | 0.78 | | | | | 10 | | | | |
| | | Dipropylene glycol butyl ether | 1.50 | | | | | | 10 | | | |
| Surfactant | E1010 | | | 0.1 | 0.1 | 0.1 | 0.1 | 0.1 | 0.1 | 0.1 | 0.1 | 0.1 |
| Preservative | Proxcel GXL (S) | | | 0.05 | 0.05 | 0.05 | 0.05 | 0.05 | 0.05 | 0.05 | 0.05 | 0.05 |
| Ion exchanged water | | | | 69.85 | 69.85 | 69.85 | 69.85 | 69.85 | 69.85 | 64.85 | 66.85 | 59.85 |
| Total | | | | 100 | 100 | 100 | 100 | 100 | 100 | 100 | 100 | 100 |
| Remark | | | | Present invention | Present invention | Present invention | Present invention | Present invention | Present invention | Present invention | Present invention | Present invention |

EP 4 417 659 A1

[Table 5]

| Treatment liquid | | | | 20 | 21 | 22 | 23 | 24 | 1 25 |
|---|---|---|---|---|---|---|---|---|---|
| Cationic urethane compound | | Type | Classification | | | | | | |
| | | Compound 1 | Water-soluble | | | | | | |
| | | Compound 2 | Water-soluble | | | | | | |
| | | Compound 3 | Water-soluble | | | | | | |
| | | Compound 4 | Water-soluble | | | | | | |
| | | Compound 5 | Water-dispersible | | 5 | | | | |
| | | Compound 6 | Water-dispersible | | | 5 | | | |
| | | Compound 7 | Water-dispersible | | | | 5 | 5 | |
| | | Compound 8 | Water-dispersible | | | | | | 5 |

| Treatment liquid | | | | 20 | 21 | 22 | 23 | 24 | 1 25 |
|---|---|---|---|---|---|---|---|---|---|
| Composition | Solvent | Type | LogP | | | | | | |
| | | Glycerin | -1.76 | 10 | 10 | 10 | 10 | 5 | 10 |
| | | Ethylene glycol | -1.36 | 20 | 20 | 20 | 20 | 15 | 20 |
| | | Triethylene glycol dimethyl ether | -0.67 | | | | | | |
| | | Dipropylene glycol | -0.46 | | | | | | |
| | | Tripropylene glycol monomethyl ether | 0.08 | | | | | | |
| | | 1,5-Pentanediol | 0.27 | | | | | | |
| | | Triethylene glycol butyl ether | 0.51 | | | | | 10 | |
| | | 1,2-Hexanediol | 0.58 | | | | | | |
| | | Propylene glycol diacetate | 0.74 | | | | | | |
| | | Ethylene glycol monobutyl ether | 0.78 | | | | | | |
| | | Dipropylene glycol butyl ether | 1.50 | | | | | | |
| | Surfactant | E1010 | | 0.1 | 0.1 | 0.1 | 0.1 | 0.1 | 0.1 |
| | Preservative | Proxcel GXL (S) | | 0.05 | 0.05 | 0.05 | 0.05 | 0.05 | 0.05 |
| | Ion exchanged water | | | 69.85 | 64.85 | 64.85 | 64.85 | 64.85 | 64.85 |
| | Total | | | 100 | 100 | 100 | 100 | 100 | 100 |
| Remark | | | | Comparative | Comparative | Comparative | Comparative | Comparative | Comparative |

EP 4 417 659 A1

18

3. Preparation of ink

3-1. Preparation of pigment dispersion liquid

78 parts by mass of water was mixed with 7 parts by mass of a styrene-butyl acrylate-methacrylic acid copolymer (anionic dispersant, weight average molecular weight: 16000, anionic group equivalent: 3.5 meq/g) as a pigment dispersant, and then the mixture was heated and stirred to prepare a neutralized product of the pigment dispersant. 15 parts by mass of C.I. Pigment Blue 15:3 was added to the mixed liquid, and the mixture was premixed and then dispersed using a sand grinder filled with 0.5 mm zirconia beads at a volume ratio of 50% to obtain a cyan pigment dispersion liquid having a pigment concentration of 15% by mass.

3-2. Preparation of ink

Then, the following components were mixed in a total of 100 parts by mass to obtain an ink.

The prepared pigment dispersion liquid (pigment concentration: 15% by mass): 30 parts by mass
Resin dispersion liquid (Superflex 460 (manufactured by DKS Co. Ltd., polyurethane water-dispersible resin, solid content: 38% by mass, Tg: - 21°C): 20 parts by mass
Ethylene glycol: 20 parts by mass
Glycerin: 10 parts by mass
OLFINE E 1010 (surfactant): 0.1 parts by mass
ProxcelGXL (preservative): 0.05 parts by mass
Water: balance

4. Image formation and evaluation

<Examples 1 to 19 and Comparative Examples 1 to 6>

4-1. Image formation

Image formation was performed using the prepared ink and each treatment liquid.
As an image forming apparatus, a simple printing tester equipped with KM 1024 i head manufactured by Konica Minolta, Inc., was prepared. The prepared ink and each treatment liquid described in Tables 3 to 5 were set in the head.

(1) Application of ink

Cotton satin (100% cotton) was prepared as a fabric. This cotton satin was pretreated with an aqueous 0.5% by mass acetic acid solution by the mangle method at a pickup rate of 100%.
Then, the ink was ejected from the head to the fabric to form a solid image of 200 mm × 200 mm. The ink was ejected at 540 dpi main scan × 720 dpi sub scan. The dpi represents the number of ink droplets (dots) per 2.54 cm. The ejection frequency was 22.4 kHz.
Then, the fabric to which the ink had been applied was dried at 150°C for 3 minutes in a belt conveyance type dryer to form an image layer.

(2) Application of treatment liquid

Each treatment liquid described in Table 6 was ejected from the head on the image layer formed on the fabric, and applied on the solid image. Then, the resultant was dried at 150°C for 3 minutes in a belt conveyance type dryer to obtain an image formed object. The application amount of the treatment liquid was 12 g/m$^2$.

4-2. Evaluation

The texture of the obtained image formed object and the injection stability of the treatment liquid were evaluated by the following method.

(1) Texture

The imaged formed fabric was cut into a size of 5 × 20 cm to obtain a sample piece. The bending stress B-

MEAN [gf*cm$^2$/cm] of each of an unused fabric X, an untreated image formed fabric Y, and a treated image formed fabric Z was measured using a KES-FB2-A pure bending tester (manufactured by KATO TECH CO., LTD.). Then, a difference ΔB in bending stress between the untreated fabric and the treated fabric was calculated and evaluated based on the following criteria.

The width of the fabric was 20 cm. The unused fabric X refers to a fabric to which neither ink nor treatment liquid was applied; the untreated image formed fabric Y refers to a fabric after application of the ink and before application of the treatment liquid; and the treated image formed fabric Z refers to a fabric after application of both the ink and the treatment liquid (image formed object).

5: ΔB is 0.02 or less, and the difference from the unused fabric X is hardly recognized.
4: ΔB is more than 0.02 and 0.04 or less, and the texture was improved from the untreated image formed fabric Y
3: ΔB is more than 0.04 and 0.06 or less, and the texture was slightly improved from the untreated image formed fabric Y
2: ΔB is more than 0.06 and 0.08 or less, and the texture was equivalent to the untreated image formed fabric Y
1: ΔB is more than 0.08, and the texture was further deteriorated from the untreated image formed fabric Y

Evaluation of 3 or more was defined as an acceptable range.

(2) Injection stability

The decapping property of each treatment liquid set in the head was evaluated in an LL environment having an environmental temperature and humidity of 20°C and 40% RH and a head surface temperature of 35°C. The rate of decrease in speed of droplets in the intermittent time of 2 seconds was calculated based on the following formula and evaluated as follows.

$$\text{Rate of decrease in speed of droplet (\%)} = [(\text{initial speed of droplet - speed of droplet after 2 seconds})/\text{initial speed of droplet}] \times 100$$

5: The first rate of decrease in speed of droplet is less than 10%
4: The first rate of decrease in speed of droplet is 10% or more and less than 40%
3: The first rate of decrease in speed of droplet is 40% or more and less than 80%
2: The first rate of decrease in speed of droplet is 80% or more and less than 100%
1: The first rate of decrease in speed of droplet is 100% or more

The evaluation results of Examples 1 to 19 and Comparative Examples 1 to 6 are shown in Table 6.

[Table 6]

|  | Treatment liquid | Texture | Injection stability |
|---|---|---|---|
| Example 1 | 1 | 3 | 4 |
| Example 2 | 2 | 4 | 3 |
| Example 3 | 3 | 4 | 3 |
| Example 4 | 4 | 3 | 2 |
| Example 5 | 5 | 4 | 3 |
| Example 6 | 6 | 3 | 3 |
| Example 7 | 7 | 3 | 3 |
| Example 8 | 8 | 4 | 3 |
| Example 9 | 9 | 4 | 4 |
| Example 10 | 10 | 4 | 4 |
| Example 11 | 11 | 4 | 5 |
| Example 12 | 12 | 5 | 5 |

(continued)

|  | Treatment liquid | Texture | Injection stability |
|---|---|---|---|
| Example 13 | 13 | 5 | 5 |
| Example 14 | 14 | 4 | 5 |
| Example 15 | 15 | 4 | 3 |
| Example 16 | 16 | 3 | 3 |
| Example 17 | 17 | 5 | 4 |
| Example 18 | 18 | 4 | 4 |
| Example 19 | 19 | 5 | 5 |
| Comparative Example 1 | 20 | 2 | 5 |
| Comparative Example 2 | 21 | 1 | 3 |
| Comparative Example 3 | 22 | 1 | 3 |
| Comparative Example 4 | 23 | 1 | 3 |
| Comparative Example 5 | 24 | 1 | 3 |
| Comparative Example 6 | 25 | 1 | 3 |

As shown in Table 6, it is found that when each treatment liquid of Comparative Examples 1 to 6 including a water-dispersible type cationic urethane compound (water-dispersible resin) is used, the texture of the image formed object is poor. On the other hand, it is found that when each treatment liquid of Examples 1 to 19 including a water-soluble type cationic urethane compound (water-soluble compound) is used, the texture of the image formed object is rather improved.

From these, it is found that the texture can be improved by using a treatment liquid including a water-soluble cationic urethane compound.

In particular, it is found that the injection stability is further improved by using a solvent having a LogP value within the range of - 0.5 to 0.75, preferably 0.25 to 0.75 (comparison with Examples 8 to 16). This is presumably because the solubility of the cationic urethane compound hardly decreases and phase separation is further suppressed even when the injection is performed at a high temperature.

According to an embodiment of the present invention, an inkjet composition for textile printing capable of improving texture while increasing fixability of a pigment, a treated fabric, and an image formed object can be provided.

Although embodiments of the present invention have been described and illustrated in detail, the disclosed embodiments are made for purposes of illustration and example only and not limitation. The scope of the present invention should be interpreted by terms of the appended claims.

## Claims

1. An inkjet composition for textile printing, comprising:
   a water-soluble cationic urethane compound containing a structural unit derived from polyethylene glycol.

2. The inkjet composition for textile printing according to claim 1,
   wherein the water-soluble cationic urethane compound has a tertiary amino group.

3. The inkjet composition for textile printing according to claim 2,
   wherein at least a part of the tertiary amino group is neutralized with an acid or quaternized with a quaternizing agent.

4. The inkjet composition for textile printing according to claim 1,
   wherein the water-soluble cationic urethane compound has a weight average molecular weight of 600 to 10000.

5. The inkjet composition for textile printing according to claim 1,
   wherein a content of the water-soluble cationic urethane compound is 1 to 10% by mass based on the inkjet composition for textile printing.

6. The inkjet composition for textile printing according to claim 1, further comprising:
a solvent having a LogP value of - 0.5 or more and 0.75 or less.

7. The inkjet composition for textile printing according to claim 6,
wherein the solvent has a LogP value of 0.25 or more and 0.75 or less.

8. The inkjet composition for textile printing according to claim 6,
wherein a content of the solvent is 3 to 10% by mass.

9. The inkjet composition for textile printing according to claim 1,
comprising substantially no coloring material.

10. A treated fabric, comprising:

a fabric; and
a water-soluble cationic urethane compound containing a structural unit derived from polyethylene glycol that is attached to the fabric.

11. An image formed object, comprising:

a fabric;
an image layer placed on the fabric; and
a water-soluble cationic urethane compound containing a structural unit derived from polyethylene glycol that is attached to the fabric or the image layer.

12. A method for forming an image, comprising the steps of

applying an inkjet ink containing a pigment on a fabric by an inkjet method; and
applying the inkjet composition for textile printing according to any one of claims 1 to 9 on the inkjet ink applied to the fabric.

**EP 4 417 659 A1**

Europäisches
Patentamt
European
Patent Office
Office européen
des brevets

# EUROPEAN SEARCH REPORT

Application Number

EP 24 15 7843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 182 545 A (EAST AQUILARIA SINENSIS LONG LINK NEW MATERIAL SCIENCE AND TECH STOCK) 15 March 2022 (2022-03-15) | 1-11 | INV.<br>C09D11/322<br>C09D11/54 |
| A | * claims 1, 4, 10 *<br>* paragraphs [0027], [0167] * | 12 | D06P1/44<br>D06P5/08<br>D06P5/30 |
| A | US 2020/369903 A1 (VAN AERT HUBERTUS [BE] ET AL) 26 November 2020 (2020-11-26)<br>* the whole document * | 1-12 | D06P1/52 |

-----

-----

TECHNICAL FIELDS
SEARCHED       (IPC)

D06P
C09D

The present search report has been drawn up for all claims

| Place of search | Date of completion of the search | Examiner |
|---|---|---|
| The Hague | 1 May 2024 | Beyazit, Selim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 24 15 7843

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2024

| Patent document cited in search report | | Publication date | Patent family member(s) | | Publication date |
|---|---|---|---|---|---|
| CN 114182545 | A | 15-03-2022 | NONE | | |
| US 2020369903 | A1 | 26-11-2020 | CN | 111372965 A | 03-07-2020 |
| | | | CN | 111386293 A | 07-07-2020 |
| | | | EP | 3717536 A1 | 07-10-2020 |
| | | | EP | 3717539 A1 | 07-10-2020 |
| | | | US | 2020369881 A1 | 26-11-2020 |
| | | | US | 2020369903 A1 | 26-11-2020 |
| | | | WO | 2019105904 A1 | 06-06-2019 |
| | | | WO | 2019105962 A1 | 06-06-2019 |

EPO FORM P0459

For more details about this annex : see Official Journal of the European Patent Office, No. 12/82

**EP 4 417 659 A1**

**REFERENCES CITED IN THE DESCRIPTION**

**Patent documents cited in the description**

- JP 2017149812 A
- JP 2020045445 A